# EUROPEAN PATENT SPECIFICATION

(11) **EP 3 482 621 B1**
(45) Date of publication and mention of the grant of the patent: **11.11.2020**
(21) Application number: 18197127.6
(22) Date of filing: 27.09.2018
(51) Int. Cl.: A01D 34/00

(54) **LAWN MOWER ROBOT AND CONTROL METHOD**
RASENMÄHERROBOTER UND STEUERUNGSVERFAHREN
ROBOT POUR TONDRE LE GAZON ET SON PROCÉDÉ DE COMMANDE

(30) Priority: 10.11.2017 IT 201700128508
(43) Date of publication of application: 15.05.2019
(73) Proprietor: Bernini, Fabrizio, 52021 Bucine - Arezzo (IT)
(72) Inventor: Bernini, Fabrizio, 52021 Bucine - Arezzo (IT)
(74) Representative: Milli, Simone

(56) References cited:
- EP-A1- 2 428 107
- WO-A1-2014/058358

## Description

This invention relates to the field of machine tools for gardening.

More specifically, the invention relates to a lawn mower robot and the relative cutting method.

The mowers are used to keep lawns, gardens and grassy areas in general in optimum conditions, that is to say, for keeping the grass below a certain height in a substantially homogeneous manner over the entire cutting area.

Lawn mower robots usually operate inside a working area, delimited by a perimeter string, following an irregular route, so that it is possible to reduce the risk of an incomplete cutting of the grass in some areas of the garden. There are various cutting methods which the lawn mower robot may use to carry out its work, in particular with regards to the control of the route to be followed.

For example, the robot might move along a random route, that is, moving in a straight line and changing direction every time it encounters an obstacle or the perimeter string which delimits the working area.

This means that the lawn mower moves according to directions determined randomly, until reaching close to the boundary of the cutting area.

In this circumstance, it reverses its direction of movement and returns to moving randomly inside the cutting area.

After a certain period of time, the lawn mower has passed over the entire cutting area, and has therefore carried out its duty.

If the dimensions of the cutting area are particularly large, a use as briefly described above necessarily requires very lengthy working times, since the random movement over large areas inevitably requires considerable time before completely covering the desired land.

Some robots use, on the other hand, a satellite navigation system, for example GPS, to improve the accuracy with which they move inside the working area in such a way as to reach all parts of the garden.

However, the use of this method can result in problems when the signal is screened by buildings, roofs, trees or other items; in this case, the robot blocks, since it no longer receives information on the route to be followed. A further possible method comprises moving the robot according to a spiral route in such a way as to reduce the effort of the cutting blade motor if the robot cuts an area of the garden in which the grass is particularly high or thick.

The time of execution of the work also become extremely lengthy when using this technique in the case of particularly large cutting areas.

This results in a series of operational drawbacks, relative, for example, to the excessive electricity consumption necessary for working for a lengthy period of time.

Moreover, in light of the above, the lawn mower is used in a not very efficient manner, causing a shortening of its working life due to wear of its parts, increasing the probability of faults and requiring the performance of maintenance operations with a greater frequency.

An example of a known device in this field can be found in document EP2428107.

In this context, the technical purpose which forms the basis of this invention is to provide a lawn mower robot and relative method of use which overcomes at least some of the above-mentioned drawbacks of the prior art.

More specifically, the aim of this invention is to provide a lawn mower which is able to optimise the relative operation, managing its movement inside the cutting area in an efficient manner.

A further aim of the invention is to provide a lawn mower which is able to keep substantially uniform, within acceptable limits, the height of the grass inside the cutting area.

An auxiliary aim of the invention is to provide a lawn mower which can be monitored in a precise and reliable manner even without the intervention on site of an operator.

The technical purpose indicated and the aims specified are substantially achieved by a lawn mower robot and the relative cutting method comprising the technical features described in one or more of the appended claims.

The invention describes a lawn mower robot which comprises a control unit configured for dividing a cutting area into a plurality of separate cutting portions and moving the lawn mower robot and a legible storage support configured for storing a map of the cutting portions and a plurality of time references.

Each time reference is associated with a respective last cutting portion and represents when the mower has carried out a cutting operation in that cutting portion.

The control unit is configured for checking, each time the lawn mower robot enters into a cutting portion, the time reference associated with it and performing an operation for cutting the grass if the time reference is older than a time threshold value.

The invention also relates to a method for controlling the movement of a lawn mower robot comprising the steps of:
a) preparing a lawn mower robot which comprises a control unit configured for dividing a cutting area into a plurality of separate cutting portions and a legible storage support;
b) moving the lawn mower robot, introducing it in a cutting portion;
c) checking whether the legible storage support has stored a time reference associated with the cutting portion and whether the time reference is more recent than a time threshold value;
d) in the case of a negative check, activating an operation for cutting the grass inside the cutting portion;
e) storing, after the cutting operation, in the legible storage support, a time reference associated with it, representing when the lawn mower has carried out the cutting operation.

Further features and advantages of this invention are more apparent in the detailed description below, with reference to a preferred, non-restricting, embodiment of a lawn mower robot and the relative cutting method, as illustrated in the accompanying drawings, in which:
- Figure 1 schematically shows a lawn mower robot in which are denoted the features according to this invention;
- Figures 2a, 2b and 2c show a possible operating situation of the lawn mower robot according to this invention;
- Figure 3 shows an example block diagram of the operation according to a particular aspect of the control method of this invention.

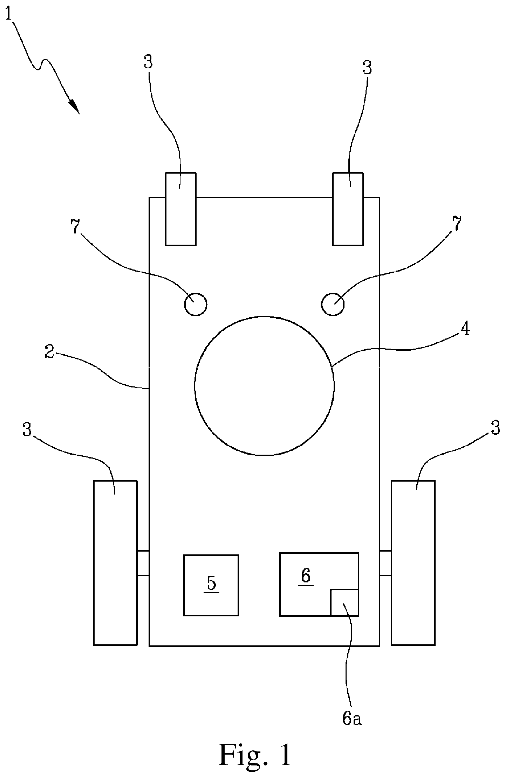

Figure 1 generically indicates with the numeral 1 a lawn mower robot which comprises a frame 2; the frame 2 may comprise, for example, an upper body and a lower body, preferably associated with each other in a removable fashion.

The upper body and the lower body may be made, for example, of plastic material.

The lawn mower also comprises movement means 3 mounted on the frame 2 for moving the frame 2 relative to a working surface or cutting area "A" L; the latter may be a lawn, a garden, or in general any surface on which the lawn mower is called to operate.

The movement means 3 preferably comprise a plurality of wheels, which are mounted on the frame 2, and one or more motors, set up for rotating the wheels.

Preferably, the lawn mower is equipped with four wheels, suitably motor-driven.

The lawn mower also comprises one or more cutting blades 4, mounted on the frame 2, to cut the grass present on the working surface. Advantageously, the cutting blades 4 are moved by suitable motors, housed inside the frame 2.

By way of example, the motors can be electric motors, powered by a battery; the latter may be of the rechargeable type.

By way of example, this description refers to a motor designed to move a cutting blade.

Preferably, the recharging, which occurs at a fixed station 1a or recharging base, is achieved by electrical coupling, in particular of the inductive type. Preferably, the battery may also power other electrical/electronic devices provided on the lawn mower.

The lawn mower robot 1 also comprises a control unit 5 configured for dividing the cutting area "A" into a plurality of separate cutting portions "P" and moving the lawn mower robot 1 between one cutting portion "P" and another and inside the individual cutting portions "P".

In other words, the control unit 5 is configured for dividing the cutting area "A" in which the lawn mower robot 1 is working into a plurality of subareas, and moving the lawn mower robot 1 between one portion and the other performing operations for cutting the grass inside the individual portions when necessary.

More specifically, the control unit 5 is configured for moving the lawn mower robot 1 in the cutting area "A" according to a random path.

That is to say, the lawn mower robot 1 moves between a cutting portion "P" and the other following a random path.

On the other hand, during an operation for cutting the grass, the control unit 5 is configured for moving the lawn mower robot 1 inside the cutting portion "P" according to a spiral path.

The control unit 5 may be positioned entirely on the supporting structure or partly set up on the supporting structure and like a remote control unit 5 for example set up in the robot recharging base.

In this case, the term lawn mower robot 1 includes the cutting system which comprises both the self-propelled robot and the remote control unit 5, for example its recharging base.

Advantageously, the lawn mower also comprises a legible storage support 6 housed in the frame 2 and configured for storing a plurality of time references.

Each of the time references is associated with a respective portion of the cutting area "A" and represents when the lawn mower has carried out a cutting operation in this portion.

More specifically, each time reference represents when the lawn mower carried out the last cutting action in the respective portion of the cutting area "A" associated with it.

Every time the lawn mower robot 1 enters into a cutting portion "P" the control unit 5 is configured for checking the time reference associated with the cutting portion "P" and performing an operation for cutting the grass if the time reference is older than a time threshold value.

In other words, when the lawn mower robot 1 enters into a cutting portion "P", the control unit 5 reads the time reference associated with that cutting portion "P" stored inside the legible storage support 6 and compares it with a time threshold value which may be preset by a user, if the time reference is older than the time threshold value then the control unit 5 will start the execution of the operation for cutting the grass inside that cutting portion "P".

on the contrary, the robot will pass through the cutting portion "P", without performing the operation for cutting the grass, until entering a further cutting portion "P" performing a new check on the time reference associated to the further cutting portion "P".

This process is repeated until the lawn mower robot 1 has completed the cutting operation on all the cutting portions "P" in which the cutting area "A" has been divided, or until it finishes the charge of the lawn mower robot 1 or until other conditions occur such that it is necessary for the lawn mower robot 1 to conclude its activities.

It should be noted that the techniques for determining the conclusion of the lawn mower activities are well known in the sector, and will not therefore be described below. Any of these techniques may be used within the context of the invention.

By way of a non-limiting example, the user could set a time threshold of three days, upon the entering in a cutting portion "P" the control unit 5 reads the time reference associated with it and, if more than three days have passed from when the lawn mower robot 1 performed the cutting operation inside the particular cutting portion "P" (that is, the time reference is older than three days), the operation for cutting the grass will be performed.

If, on the other hand, less than three days have passed since the last cutting operation (that is, the time reference is not older than three days), the lawn mower robot 1 passes through the cutting portion "P" without cutting the grass.

The control unit 5 is configured for updating the time reference of a cutting portion "P" after having performed the cutting operation inside it.

Each time the lawn mower robot 1 cuts the grass inside a cutting portion "P" the control unit 5 performs an updating of the time reference overwriting the existing time reference with the new time reference relative to the moment in which the cutting operation has been performed.

During first use of the lawn mower robot 1 the time threshold value may be a factory value or a value which can be selected by the user, subsequently, the control unit 5 is configured for modifying, in particular lowering, the time threshold value as a function of at least one operating parameter of the lawn mower robot 1, which will depend directly also on the physical parameters of the particular cutting area "A" inside of which the lawn mower robot 1 is to operate.

For example, the at least one operating parameter may be a total time taken for performing a cutting operation on each cutting portion "P".

In other words, the control unit 5 is configured for checking which is the total time taken by the lawn mower robot 1 to cut the grass over the entire cutting area "A", therefore on each single cutting portion "P" which makes up the particular cutting area "A", and modifying the time threshold value as a function of this total time.

For example, if the preset time threshold value (whether it is a factory value or set by the user) is equal to three days and the control unit 5 detects that the total time taken for performing a cutting operation on each cutting portion "P" is equal to two days, the control unit 5 is configured for lowering the time threshold value, for example changing it to two days, in such a way as to prevent the lawn mower robot 1 from passing a whole day without performing cutting operations on any cutting portion "P" (since during the third day no time reference could in this case be older than three days).

Advantageously, the lawn mower robot 1 may comprise a plurality of sensors 7 configured for measuring a plurality of parameters relative to the operating conditions of the lawn mower robot 1 and an auxiliary storage module 6a containing threshold values representing respective operating parameters of the lawn mower robot 1 which can be measured y the plurality of sensors 7.

Preferably, the auxiliary storage module 6a forms part of the legible storage support 6.

The control unit 5 is configured for performing a comparison between each parameter and the respective threshold value representing the parameter and activating an operation for cutting the grass inside the cutting portion "P" the lawn mower robot 1 is at that moment as a function of the result of the comparison.

The parameter could, for example, be a force of the motors which move the blades: if the control unit 5, during the movement of the lawn mower robot 1 across a cutting portion "P", detects that the motors which move the blades are subjected to a force greater than the respective threshold value, it may activate the cutting operation inside the cutting portion "P" even if the time reference associated with it is not older than the time threshold value.

Advantageously, the lawn mower robot 1 may be equipped with a transmission module, associated with the above-mentioned auxiliary storage module 6a, for a transmission to a remote processor of a main signal, representing at least part of the operating parameters measured by the plurality of sensors 7.

More specifically, at least one of the parameters may indicate a fault or malfunction of the lawn mower.

Preferably, the transmission module is a GPRS module.

The remote processor could be part, for example, of a service centre, to which a plurality of lawn mowers, positioned potentially anywhere in the world, send the relative data.

The service centre may act both as a centralised archive, in which a large amount of data remains stored, which may be used both for statistical purposes and for operational purposes.

In fact, if it is opportune sending a response signal to a lawn mower robot 1, for example following the signalling of a fault or malfunction, the various data items archived over time may provide a useful basis for study to define a suitable response.

Advantageously, the lawn mower can also comprise a reception module, preferably of the GPRS type.

By means of the reception module the lawn mower can receive response signals from the service centre (that is, from the remote processor).

More specifically, the response signal may incorporate one or more correction/setting data items for operation of the lawn mower.

A solution of this type is particularly advantageous for a series of reasons. Firstly, as mentioned above, it allows a large volume of data to be collected, which is very useful for processing of a statistical and operational nature.

Also, where faults or malfunctions occur which can be resolved via software, it is possible to return the lawn mower to performance conditions without an operator moving physically close to the mower and intervening materially on the on the lawn mower itself.

Operatively, when the lawn mower robot 1 is activated for the first time, the legible storage support 6 will not contain any information relating to the shape of the cutting area "A" and no time reference (as the control unit 5 has still not defined any cutting portion "P").

The robot will then start to move in a random manner away from the recharging base and the control unit 5 will define a first cutting portion "P", for example a square with a side measuring between two and four metres. Since the cutting portion "P" is not associated with any time reference signal, the cutting unit will start the cutting operation by moving the lawn mower robot 1 according to a spiral path inside the cutting portion "P".

At the end of the cutting operation a time reference associated with the cutting portion "P" is stored representing when this operation has been performed.

The control unit 5 will move the lawn mower robot 1 in a random direction until leaving the cutting portion "P" repeating the operations just described so as to divide the cutting area "A" into a plurality of cutting portions "P" to which the time references are gradually associated.

If the lawn mower robot 1 enters into a cutting portion "P" adjacent to an edge of the cutting area "A", the lawn mower robot 1 stores the presence of the edge in this cutting portion "P" thereby defining the boundaries of the cutting area "A" inside of which it must operate.

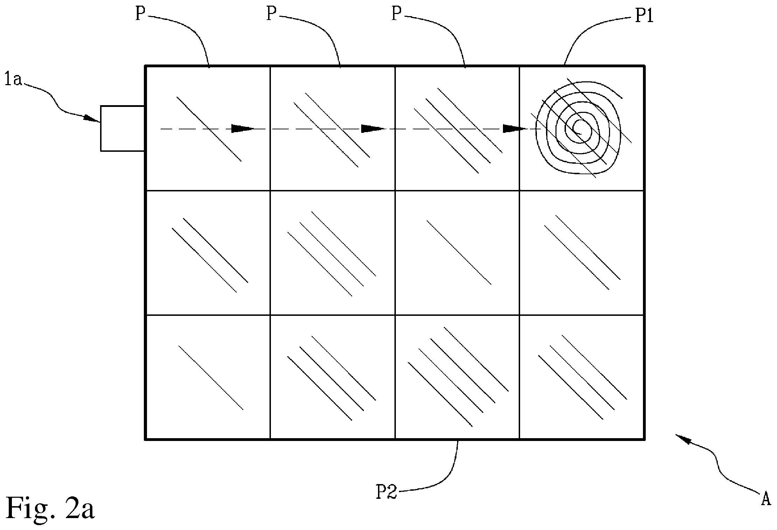

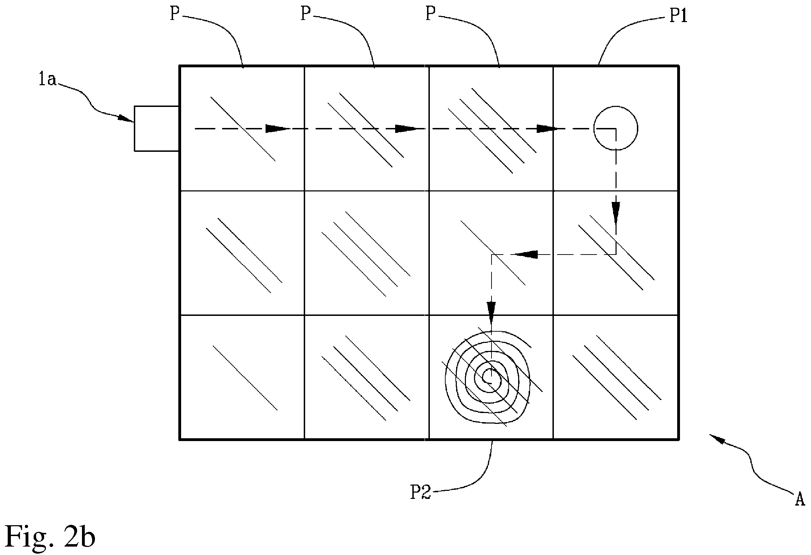

Figures 2a and 2b show a cutting area "A" divided into cutting portions "P" on which the lawn mower robot 1 according to this invention is moving having a time threshold set, by way of example, to three days.

More specifically, Figure 2a denotes with an increasing number of diagonal lines inside the individual cutting portions the time passed since the last cutting operation inside that cutting portion "P".

For example, one diagonal line indicates that one day has passed since the last cutting operation, two lines indicate that two days have passed and so on.

Figure 2a shows the lawn mower robot 1 which passes through a series of cutting portions "P" until having a time reference of not older than 3 days until reaching the cutting portion "P1" which has a time reference which is four days' old (represented by four diagonal lines).

For this reason, the lawn mower robot 1 starts a cutting operation, preferably following a spiral path, at the end of which it updates the time reference associated with the cutting portion "P1".

Figure 2b then shows the lawn mower robot 1 which returns to its movement through the cutting portions "P", in particular the time reference of the cutting portion "P1" has been updated (denoted in the drawing with "0") to indicate that a cutting operation has been performed in the current day.

The lawn mower robot 1 will continue its random movement inside the cutting area until encountering the cutting portion "P2" inside of which it will perform a cutting operation.

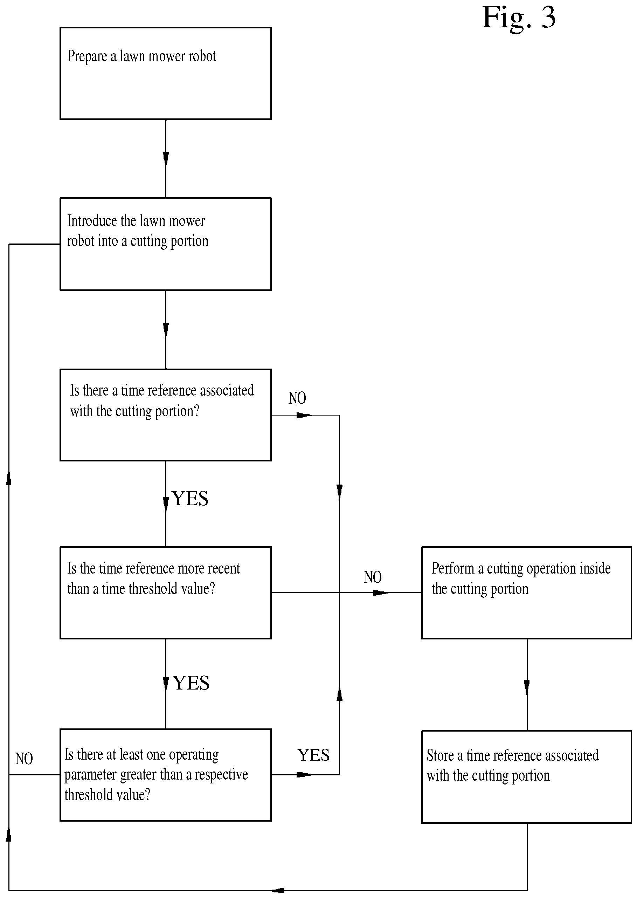

This invention also relates to a method for controlling the movement of a lawn mower robot 1 inside a cutting area "A", of which Figure 3 shows a summarising block diagram.

The method comprises a step a) for preparing a lawn mower robot which comprises a control unit 5 configured for dividing a cutting area "A" into a plurality of separate cutting portions "P" and a legible storage support 6, in particular a lawn mower robot 1 as described above.

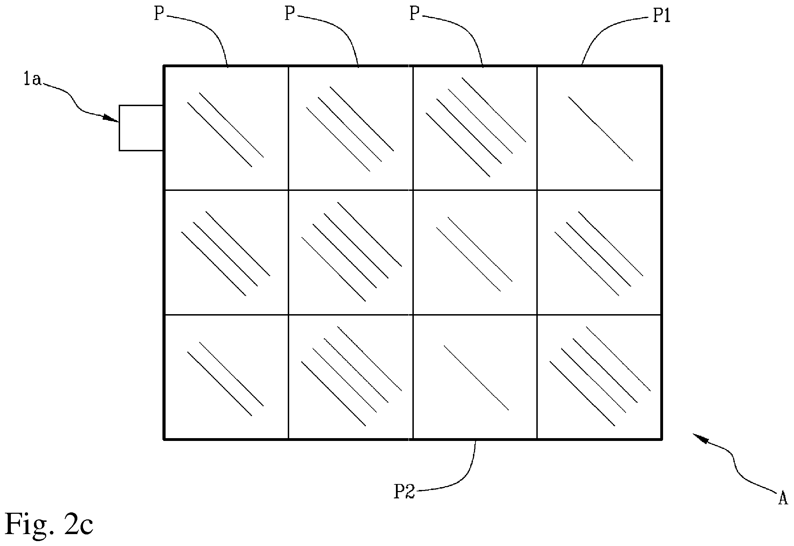

The day after all the time references will be older by one day, as shown by way of example in Figure 2c.

This is followed by step b) for moving the lawn mower robot 1 introducing it in a cutting portion "P".

In other words, the lawn mower robot 1 is moved inside the cutting area "A" in which it must operate, introducing it in a cutting portion "P".

At the same time as the entrance of the lawn mower robot 1 inside a cutting portion "P", a step c) is performed to check whether the legible storage support 6 has stored a time reference associated with the cutting portion "P" and whether the time reference is more recent than a time threshold value.

If the check is negative, that is, if the legible storage support 6 does not contain a time reference associated with the cutting portion "P" in which the lawn mower robot 1 has entered, or the time reference is older than the time threshold value, then the control unit 5 actuates a step d) for activating an operation for cutting the grass inside the cutting portion "P".

In other words, if one of the two conditions mentioned above occurs then the lawn mower robot 1 will cut the grass inside the cutting portion "P". Lastly, if the cutting operation has been performed, a step e) is actuated for storing in the legible storage support 6 a time reference associated with the cutting portions "P" in which the cutting operation has been just performed, representing when the lawn mower has carried out this operation.

More specifically, the step b) is performed by moving the lawn mower robot 1 according to a random path.

On the other hand, if the cutting operation is performed inside the cutting portion "P", during the execution of the operations the lawn mower robot 1 is moved along a spiral path.

In other words, the lawn mower robot 1 moves on the cutting area "A" by moving from one cutting portion "P" to the other in a random manner, whilst it will be moved according to a spiral path if the control unit 5 starts the cutting operation inside a particular cutting portion "P".

In this way it is possible to use the advantageous features of both the methods, reducing at the same time to a minimum the occurrence of the respective disadvantageous features.

In particular, by using the spiral movement method, which is particularly useful in the case of high and/or thick grass, however only inside small areas, for example squares having sides with a length of between 2 and 4 metres, in such a way as to maintain short and reasonable times for completing the cutting operation, and then moving the robot in a random manner between one cutting portion "P" and the other, a solution characterised by the implementation and operational simplicity, thus guaranteeing a uniform covering of the entire the cutting area "A".

The method according to this invention also comprises a step of determining and storing a perimeter "X" of the cutting area "'A" inside of which the lawn mower robot 1 can be moved.

This step may be performed at the same time as the first use of the lawn mower robot 1 and the perimeter "X" may be stored in the legible storage support 6.

In fact, during its first use, no cutting portion "P" will have a time reference associated with it and hence the lawn mower robot 1 will perform a cutting operation inside them.

In order to be able to perform this operation the lawn mower robot 1 will pass, following its spiral path, over the entire area of the cutting portion and, if the cutting portion "P" is in proximity of the perimeter "X" of the cutting area "A", the lawn mower robot 1 will detect and consequently store the boundary represented by the perimeter "X" of the cutting area "A". Advantageously, the method according to this invention further comprises control steps which make it possible to guarantee that the height of the grass inside the cutting area "A" is maintained substantially uniform, within acceptable limits.

More specifically, after the step d), the method according to this invention comprises a step d1) to measure a plurality of parameters relative to the operating conditions of the lawn mower robot 1, then, in a step d2) a comparison is made between each measured parameter and a respective threshold value representing the parameter and activating, in a step d3), an operation for cutting the grass as a function of the result of the comparison, in particular whether the value of the operating parameter exceeds the threshold value.

In other words, if the comparison of the time reference is a positive check, and therefore no cutting operation need be activated, the control unit 5 is further configured for measuring a plurality of operating parameters, which comprise at least one force of the motor of the cutting blade of the lawn mower robot 1, and depending on the comparison between the measured parameter and the threshold value, stored in the legible storage support 6, it will decide whether to perform or not the cutting operation inside the cutting portion "P".

More specifically, the control unit 5 performs the cutting operation if at least one parameter measured exceeds and is therefore greater than the respective threshold value.

In this way, even if the number of days set as the time threshold has not been passed before allowing a further execution of the cutting operation in a certain cutting portion "P", if the control unit 5 measures a force of the cutting blade greater than a predetermined threshold value (indicating for example the presence of tall grass) it can activate in any case the execution of the cutting operation.

The method also comprises a step of modifying the time threshold value as a function of at least one operating parameter of the lawn mower robot 1, preferably the operating parameter being a total time taken for performing a cutting operation on each cutting portion "P".

In other words, the method comprises modifying in a dynamic manner the value of the time threshold as a function of the particular operating conditions in which the lawn mower robot 1 is operating.

More specifically, the step of modifying the time threshold value may be a step of lowering the time threshold value as a function of at least one operating parameter of the lawn mower robot 1 for example if it is detected that the lawn mower robot 1 takes less time to cut the grass over the entire area to be cut a time than the time threshold value previously set.

It should be noted, therefore, how the lawn mower robot 1 and the control method according to this invention allow the drawbacks highlighted in the prior art to be overcome in a particularly advantageous and efficient manner.

More specifically, this invention provides a versatile and efficient device which is able to guarantee an optimum coverage of the cutting area "A" and the execution of the cutting operation in a smart manner only where it is necessary, optimising the use of the batteries and reducing the wear of the mechanical components of the device, thus increasing the useful life.

## Claims

1. A lawn mower robot comprising:
- a control unit (5) configured for dividing a cutting area (A) into a plurality of separate cutting portions (P) and moving the lawn mower robot;
- a legible storage support (6) configured for storing a map of the cutting portions (P) and a plurality of time references, each time reference being associated with a respective last cutting portion (P) and representing when the mower has carried out a cutting operation in the cutting portion (P); **characterised in that** the control unit (5) is configured for checking, each time the lawn mower robot (1) enters into a cutting portion (P), the time reference associated with the cutting portion (P) and performing an operation for cutting the grass if the time reference is older than a time threshold value.

2. The lawn mower robot according to claim 1, wherein the control unit (5) is configured for moving the lawn mower robot (1) in the cutting area (A) according to a random path.

3. The lawn mower robot according to any one of the preceding claims, wherein during a cutting operation the control unit (5) is configured for moving the lawn mower robot (1) inside the cutting portion (P) according to a spiral path.

4. The lawn mower robot according to any one of the preceding claims, wherein the control unit (5) is configured for determining during cutting and storing in the legible storage support (6) a perimeter (X) of the cutting area (A).

5. The lawn mower robot according to any one of the preceding claims, wherein the control unit (5) is configured for updating the time reference of a cutting portion (P) after having performed the cutting operation in the cutting portion (P).

6. The lawn mower robot according to any one of the preceding claims, wherein the control unit (5) is configured for modifying the time threshold value as a function of at least one operating parameter of the lawn mower robot (1), preferably the operating parameter being a total time taken for performing a cutting operation on each cutting portion (P).

7. The lawn mower robot according to claim 6, wherein the control unit (5) is configured for lowering the time threshold value as a function of at least one operating parameter of the lawn mower robot (1).

8. The lawn mower robot according any one of the preceding claims, comprising:
- a plurality of sensors (7) configured for measuring a plurality of parameters relating to the operating conditions of the lawn mower robot (1), the plurality of parameters comprising at least one force of a motor of a cutting blade of the lawn mower robot (1);
- an auxiliary storage module (6a) containing threshold values representing the respective operating parameters of the lawn mower robot (1);
the control unit (5) being further configured for performing a comparison between each parameter and the respective threshold value representing the parameter, if the time reference is more recent than the time threshold value, and activating an operation for cutting the grass as a function of the result of the comparison.

9. A method for controlling the movement of a lawn mower robot (1), comprising the steps of:
a) preparing a lawn mower robot (1) comprising a control unit (5) configured for dividing a cutting area (A) into a plurality of separate cutting portions (P) and a legible storage support (6);
b) moving the lawn mower robot (1) introducing it in a cutting portion (P);
c) checking whether the legible storage support (6) has stored a time reference associated with the last cutting portion (P) and whether the time reference is most recent than a time threshold value;
d) in the case of a negative check, activating an operation for cutting the grass inside the cutting portion (P);
e) storing, after a cutting operation, in the legible storage support (6), a time reference associated with the cutting portions (P), representing when the lawn mower has carried out the cutting operation in the cutting portion (P).

10. The method according to claim 9, wherein the step b) is performed by moving the lawn mower robot (1) according to a random path.

11. The method according to claim 9 or 10, wherein the operation for cutting the grass inside the cutting portion (P) is performed by moving the lawn mower robot (1) according to a spiral path.

12. The method according to any one of claims 9 to 11, comprising a step for determining, during the cutting operation, and storing in the legible storage support (6) a perimeter (X) of the cutting zone (A) inside of which the lawn mower robot (1) can be moved.

13. The method according to any one of claims 9 to 12, wherein after the step d), if the check is positive, the method comprises the steps of:
d1) measuring a plurality of parameters relating to the operating conditions of the lawn mower robot (1), the plurality of parameters comprising at least one force of a motor of a cutting blade of the lawn mower robot (1);
d2) performing a comparison between each measured parameter and a respective threshold value, stored in the legible storage support (6), representing the parameter;
d3) activating an operation for cutting the grass as a function of the result of the comparison, in particular whether the value of the operating parameter exceeds the threshold value.

14. The method according to any one of claims 9 to 13, comprising a step of modifying the time threshold value as a function of at least one operating parameter of the lawn mower robot (1), preferably the operating parameter being a total time taken for performing a cutting operation on each cutting portion (P).

15. The method according to claim 14, the step of modifying the threshold time value being a step of lowering the time threshold value as a function of at least one operating parameter of the lawn mower robot (1).

## Patentansprüche

1. Rasenmäherroboter, umfassend:
- eine Steuereinheit (5), die dazu konfiguriert ist, ein Schneidegebiet (A) in eine Vielzahl von separaten Schneideabschnitten (P) zu unterteilen und den Rasenmäherroboter zu bewegen;
- ein lesbares Speichermedium (6), das dazu konfiguriert ist, eine Karte der Schneideabschnitte (P) und eine Vielzahl von Zeitreferenzen zu speichern, wobei jede Zeitreferenz mit einem jeweiligen letzten Schneideabschnitt (P) assoziiert ist und repräsentativ dafür ist, wann der Mäher einen Schneidevorgang in dem Schneideabschnitt (P) ausgeführt hat;
**dadurch gekennzeichnet, dass** die Steuereinheit (5) dazu konfiguriert ist, jedes Mal die mit dem Schneideabschnitt (P) assoziierte Zeitreferenz zu überprüfen, wenn der Rasenmäherroboter (1) in einen Schneideabschnitt (P) eintritt, und einen Vorgang zum Schneiden des Grases durchzuführen, wenn die Zeitreferenz älter als ein Zeitschwellenwert ist.

2. Rasenmäherroboter nach Anspruch 1, wobei die Steuereinheit (5) dazu konfiguriert ist, den Rasenmäherroboter (1) in dem Schneidegebiet (A) gemäß einer zufälligen Bahn zu bewegen.

3. Rasenmäherroboter nach einem der vorangehenden Ansprüche, wobei die Steuereinheit (5) dazu konfiguriert ist, den Rasenmäherroboter (1) während eines Schneidevorgangs innerhalb des Schneideabschnitts (P) gemäß einer spiralförmigen Bahn zu bewegen.

4. Rasenmäherroboter nach einem der vorangehenden Ansprüche, wobei die Steuereinheit (5) dazu konfiguriert ist, während des Schneidens und Speicherns in dem lesbaren Speichermedium (6) einen Perimeter (X) des Schneidegebietes (A) zu bestimmen.

5. Rasenmäherroboter nach einem der vorangehenden Ansprüche, wobei die Steuereinheit (5) dazu konfiguriert ist, die Zeitreferenz eines Schneideabschnitts (P) zu aktualisieren, nachdem der Schneidevorgang in dem Schneideabschnitt (P) durchgeführt wurde.

6. Rasenmäherroboter nach einem der vorangehenden Ansprüche, wobei die Steuereinheit (5) dazu konfiguriert ist, den Zeitschwellenwert in Abhängigkeit von mindestens einem Vorgangsparameter des Rasenmäherroboters (1) zu modifizieren, wobei der Vorgangsparameter vorzugsweise eine Gesamtzeit ist, die zum Durchführen eines Schneidevorgangs in jedem Schneideabschnitt (P) benötigt wird.

7. Rasenmäherroboter nach Anspruch 6, wobei die Steuereinheit (5) dazu konfiguriert ist, den Zeitschwellenwert in Abhängigkeit von mindestens einem Vorgangsparameter des Rasenmäherroboters (1) zu senken.

8. Rasenmäherroboter nach einem der vorangehenden Ansprüche, umfassend:
- eine Vielzahl von Sensoren (7), die dazu konfiguriert ist, eine Vielzahl von Parametern zu messen, die sich auf die Vorgangsbedingungen des Rasenmäherroboters (1) beziehen, wobei die Vielzahl von Parametern mindestens eine Kraft eines Motors eines Schneidmessers des Rasenmäherroboters (1) umfasst;
- ein Hilfsspeichermodul (6a), das Schwellenwerte enthält, die für die jeweiligen Vorgangsparameter des Rasenmäherroboters (1) repräsentativ sind;
wobei die Steuereinheit (5) ferner dazu konfiguriert ist, zwischen jedem Parameter und dem jeweiligen, für den Parameter repräsentativen Schwellenwert einen Vergleich durchzuführen, wenn die Zeitreferenz aktueller als der Zeitschwellenwert ist, und in Abhängigkeit von dem Ergebnis des Vergleiches einen Vorgang zum Schneiden des Grases zu aktivieren.

9. Verfahren zum Steuern der Bewegung eines Rasenmäherroboters (1), umfassend die folgenden Schritte:
a) Vorbereiten eines Rasenmäherroboters (1), der eine Steuereinheit (5), die dazu konfiguriert ist, ein Schneidegebiet (A) in eine Vielzahl von separaten Schneideabschnitten (P) zu unterteilen, und ein lesbares Speichermedium (6) umfasst;
b) Bewegen des Rasenmäherroboters (1) durch Einführen von diesem in einen Schneideabschnitt (P);
c) Überprüfen, ob das lesbare Speichermedium (6) eine mit dem letzten Schneideabschnitt (P) assoziierte Zeitreferenz gespeichert hat und ob die Zeitreferenz aktueller als ein Zeitschwellenwert ist;
d) im Fall einer negativen Überprüfung, Aktivieren eines Vorgangs zum Schneiden des Grases innerhalb des Schneideabschnitts (P);
e) Speichern, nach einem Schneidevorgang, in dem lesbaren Speichermedium (6), eine mit den Schneideabschnitten (P) assoziierte Zeitreferenz, die repräsentativ dafür ist, wann der Rasenmäher den Schneidevorgang in dem Schneideabschnitt (P) ausgeführt hat.

10. Verfahren nach Anspruch 9, wobei der Schritt b) durch Bewegen des Rasenmäherroboters (1) gemäß einer zufälligen Bahn durchgeführt wird.

11. Verfahren nach Anspruch 9 oder 10, wobei der Vorgang zum Schneiden des Grases innerhalb des Schneideabschnitts (P) durch Bewegen des Rasenmäherroboters (1) gemäß einer spiralförmigen Bahn durchgeführt wird.

12. Verfahren nach einem der Ansprüche 9 bis 11, umfassend einen Schritt des Bestimmens, während des Schneidevorgangs, und Speicherns in dem lesbaren Speichermedium (6) eines Perimeters (X) der Schneidezone (A), innerhalb der der Rasenmäherroboter (1) bewegbar ist.

13. Verfahren nach einem der Ansprüche 9 bis 12, wobei nach dem Schritt d), wenn die Überprüfung positiv ist, das Verfahren die folgenden Schritte umfasst:
d1) Messen einer Vielzahl von Parametern, die sich auf die Vorgangsbedingungen des Rasenmäherroboters (1) beziehen, wobei die Vielzahl von Parametern mindestens eine Kraft eines Motors eines Schneidmessers des Rasenmäherroboters (1) umfasst;
d2) Durchführen eines Vergleiches zwischen jedem gemessenen Parameter und einem jeweiligen Schwellenwert, der in dem lesbaren Speichermedium (6) gespeichert ist, der den Parameter repräsentiert;
d3) Aktivieren eines Vorgangs zum Schneiden des Grases in Abhängigkeit von dem Ergebnis des Vergleiches, insbesondere ob der Wert des Vorgangsparameters den Schwellenwert überschreitet.

14. Verfahren nach einem der Ansprüche 9 bis 13, umfassend einen Schritt des Modifizierens des Zeitschwellenwertes in Abhängigkeit von mindestens einem Vorgangsparameter des Rasenmäherroboters (1), wobei der Vorgangsparameter vorzugsweise eine Gesamtzeit ist, die zum Durchführen eines Schneidevorgangs in jedem Schneideabschnitt (P) benötigt wird.

15. Verfahren nach Anspruch 14, wobei der Schritt des Modifizierens des Schwellenwertzeitwertes ein Schritt des Senkens des Zeitschwellenwertes in Abhängigkeit von mindestens einem Vorgangsparameter des Rasenmäherroboters (1) ist.

## Revendications

1. Robot pour tondre le gazon comprenant :
- une unité de commande (5) configurée pour diviser une zone de coupe (A) en une pluralité de portions de coupe (P) séparées et pour déplacer le robot pour tondre le gazon ;
- un support de stockage lisible (6) configuré pour stocker une carte des portions de coupe (P) et une pluralité de références temporelles, chaque référence temporelle étant associée à une dernière portion de coupe (P) respective et représentant le moment où la tondeuse a effectué une opération de coupe dans la portion de coupe (P) ;
**caractérisé en ce que** l'unité de commande (5) est configurée pour vérifier, chaque fois que le robot pour tondre le gazon (1) entre dans une portion de coupe (P), la référence temporelle associée à la portion de coupe (P) et pour effectuer une opération de coupe de l'herbe si la référence temporelle est plus ancienne qu'une valeur seuil de temps.

2. Robot pour tondre le gazon selon la revendication 1, dans lequel l'unité de commande (5) est configurée pour déplacer le robot pour tondre le gazon (1) dans la zone de coupe (A) selon une trajectoire aléatoire.

3. Robot pour tondre le gazon selon l'une quelconque des revendications précédentes, dans lequel, pendant une opération de coupe, l'unité de commande (5) est configurée pour déplacer le robot pour tondre le gazon (1) à l'intérieur de la portion de coupe (P) selon une trajectoire en spirale.

4. Robot pour tondre le gazon selon l'une quelconque des revendications précédentes, dans lequel l'unité de commande (5) est configurée pour déterminer, pendant la coupe et le stockage dans le support de stockage lisible (6), un périmètre (X) de la zone de coupe (A).

5. Robot pour tondre le gazon selon l'une quelconque des revendications précédentes, dans lequel ladite unité de commande (5) est configurée pour mettre à jour la référence temporelle d'une portion de coupe (P) après avoir exécuté l'opération de coupe dans la portion de coupe (P).

6. Robot pour tondre le gazon selon l'une quelconque des revendications précédentes, dans lequel l'unité de commande (5) est configurée pour modifier la valeur seuil de temps en fonction d'au moins un paramètre de fonctionnement du robot pour tondre le gazon (1), de préférence le paramètre de fonctionnement étant un temps total nécessaire pour effectuer une opération de coupe sur chaque portion de coupe (P).

7. Robot pour tondre le gazon selon la revendication 6, dans lequel l'unité de commande (5) est configurée pour abaisser la valeur seuil de temps en fonction d'au moins un paramètre de fonctionnement du robot pour tondre le gazon (1).

8. Robot pour tondre le gazon selon l'une quelconque des revendications précédentes, comprenant :
- une pluralité de capteurs (7) configurés pour mesurer une pluralité de paramètres relatifs aux conditions de fonctionnement du robot pour tondre le gazon (1), la pluralité de paramètres comprenant au moins une force d'un moteur d'une lame de coupe du robot pour tondre le gazon (1) ;
- un module de stockage (6a) auxiliaire contenant des valeurs seuils représentant les paramètres de fonctionnement respectifs du robot pour tondre le gazon (1) ;
l'unité de commande (5) étant de plus configurée pour effectuer une comparaison entre chaque paramètre et la valeur seuil respective représentant le paramètre, si la référence temporelle est plus récente que la valeur seuil de temps, et pour activer une opération de coupe de l'herbe en fonction du résultat de la comparaison.

9. Procédé de commande du mouvement d'un robot pour tondre le gazon (1), comprenant les étapes de :
a) préparer un robot pour tondre le gazon (1) comprenant une unité de commande (5) configurée pour diviser une zone de coupe (A) en une pluralité de portions de coupe (P) séparées et un support de stockage lisible (6) ;
b) déplacer le robot pour tondre le gazon (1) en l'introduisant dans une portion de coupe (P) ;
c) vérifier si le support de stockage lisible (6) a mémorisé une référence temporelle associée à la dernière portion de coupe (P) et si la référence temporelle est plus récente qu'une valeur seuil de temps ;
d) en cas de vérification négative, activer une opération de coupe de l'herbe à l'intérieur de la portion de coupe (P) ;
e) stocker, après une opération de coupe, dans le support de stockage lisible (6), une référence temporelle, associée aux portions de coupe (P), représentant le moment où la tondeuse à gazon a effectué l'opération de coupe dans la portion de coupe (P).

10. Procédé selon la revendication 9, dans lequel l'étape b) est effectuée en déplaçant le robot pour tondre le gazon (1) selon une trajectoire aléatoire.

11. Procédé selon la revendication 9 ou 10, dans lequel l'opération destinée à couper l'herbe dans la portion de coupe (P) est effectuée en déplaçant le robot pour tondre le gazon (1) selon une trajectoire en spirale.

12. Procédé selon l'une quelconque des revendications 9 à 11, comprenant une étape consistant à déterminer, pendant l'opération de coupe, et à stocker dans le support de stockage lisible (6), un périmètre (X) de la zone de coupe (A) à l'intérieur duquel le robot pour tondre le gazon (1) peut être déplacé.

13. Procédé selon l'une quelconque des revendications 9 à 12, dans lequel, après l'étape d), si la vérification est positive, le procédé comprend les étapes de :
d1) mesurer une pluralité de paramètres relatifs aux conditions de fonctionnement du robot pour tondre le gazon (1), la pluralité de paramètres comprenant au moins une force d'un moteur d'une lame de coupe du robot pour tondre le gazon (1) ;
d2) effectuer une comparaison entre chaque paramètre mesuré et une valeur seuil respective, stockée dans le support de stockage lisible (6), représentant le paramètre ;
d3) activer une opération de coupe de l'herbe en fonction du résultat de la comparaison, en particulier si la valeur du paramètre de fonctionnement dépasse la valeur seuil.

14. Procédé selon l'une quelconque des revendications 9 à 13, comprenant une étape consistant à modifier la valeur seuil de temps en fonction d'au moins un paramètre de fonctionnement du robot pour tondre le gazon (1), le paramètre de fonctionnement étant, de préférence, un temps total nécessaire pour effectuer une opération de coupe sur chaque portion de coupe (P).

15. Procédé selon la revendication 14, dans lequel l'étape consistant à modifier la valeur seuil de temps étant une étape consistant à abaisser la valeur seuil de temps en fonction d'au moins un paramètre de fonctionnement du robot pour tondre le gazon (1).
